# EUROPEAN PATENT SPECIFICATION

(11) **EP 1 731 410 B1**
(45) Date of publication and mention of the grant of the patent: **21.10.2009**
(21) Application number: 05727638.8
(22) Date of filing: 29.03.2005
(51) Int. Cl.: B62D 25/08

(54) **STEERING SUPPORT MEMBER STRUCTURE**
LENKSTÜTZGLIEDSTRUKTUR
STRUCTURE D"ÉLÉMENT DE SUPPORT DIRECTIONNEL

(30) Priority: 01.04.2004 JP 2004108633; 01.04.2004 JP 2004108634; 01.04.2004 JP 2004108635; 01.04.2004 JP 2004108636; 02.07.2004 JP 2004196175
(43) Date of publication of application: 13.12.2006
(73) Proprietor: Calsonic Kansei Corporation, Tokyo 164-8602 (JP)
(72) Inventor: TSUSHIMA, Tadamasa, CALSONIC KANSEI CORPORATION, Tokyo 164-8602 (JP)
(74) Representative: Grünecker, Kinkeldey, Stockmair & Schwanhäusser Anwaltssozietät
(86) International application number: PCT/JP2005/005894
(87) International publication number: WO 2005/095187

(56) References cited:
- EP-A- 0 796 769
- EP-A2- 1 227 029
- DE-A1- 4 232 846
- DE-A1- 10 029 813
- DE-C1- 19 716 865
- JP-A- 11 192 972
- JP-A- 2001 001 946
- JP-A- 2001 018 841
- JP-A- 2001 253 368
- JP-A- 2003 026 004
- JP-A- 2003 026 004
- JP-A- 2003 237 633
- JP-A- 2003 306 169
- JP-B2- 3 285 276
- JP-B2- 3 313 423
- US-A1- 2003 193 207

## Description

This invention relates to a steering support member structure according to the preamble of independent claim 1. Such a steering support member structure can be taken from the prior art document JP 2001-253368 A.

In a vehicle such as an automobile, a reinforcing member such as a steering support member structure is provided, which is extended substantially along a vehicle width direction in a front portion of a vehicle interior and which is to connect right and left sides of a vehicle body. The conventional steering support member structure is constituted by iron pipes.

However, the iron pipe-constituted steering support member structure has an essential problem of its heavy weight. For this reason, it has been investigated that the weight of the steering support member structure is reduced by exchanging materials. Among such investigations, the most promising proposal is that the steering support member structure is constituted by a light alloy, and researches and development have nowadays been proceeded in various sectors (For example, see JP2001-18841A).

However, in case that the steering support member structure is constituted by the light alloy, production of long steering support member structures is difficult and costly in connection with a die and a casting equipment.

Therefore, there is an intention to provide a steering support member structure which can be easily produced in an elongate form with a reduced cost in connection with a die and a casting equipment even if the steering support member structure is made of a light alloy.

On the other hand, various parts including a steering column, an air conditioner unit, an airbag module, an audio unit, etc. are attached to the steering support member structure arranged substantially along the vehicle width direction in the front portion of the vehicle interior. In case that the steering support member structure is made of iron pipes, brackets are welded to the iron pipes, and the above parts are attached indirectly to the iron pipes via the brackets (Seen JP 2001-18841A).

However, a fitting structure for the airbag module and various parts needs to be examined, because it is difficult to weld the fitting brackets in the light alloy-constituted steering support member structure.

There is also an intention to provide a steering support member structure having a light alloy-constituted steering support member body, which steering support member structure enables an airbag module to be easily fitted.

A casting method is envisaged when the steering support member structure is to be produced from the light alloy. However, since it is difficult to adapt the pipe structure according to the casting method, a completely novel structure, which is suitable for the casting method, needs to be examined.

There is also an intention to provide a completely novel steering support member structure which is suitable for the casting method when the steering support member structure is to be produced from the light alloy:

In the vehicle such as automobile, an instrument panel is provided in a front portion of a vehicle interior. An air conditioner unit is placed inside the instrument panel, and various air conditioner ducts are extended from the air conditioner unit. Such air conditioner ducts typically include a front duct for feeding conditioned air to a passenger in a front seat. Some kinds of cars possess a rear duct for feeding conditioned air to a passenger in a rear seat (For example, see JP8-295121A).

On the other hand, the reinforcing member such as the steering support member structure is extended substantially along the vehicle width inside the instrumental panel, and connects the right and left sides of the vehicle body

The air conditioner ducts and the steering support member structure are arranged inside the instrument panel, while not interfering each other.

However, since a number of instruments are actually closely arranged inside the instrument panel with almost no interspace remained, so that it is difficult to arrange the air conditioner ducts and the steering support member structure with no interference. Particularly, it is difficult to ensure an interspace for arranging the rear duct and workability for arranging it.

There is also an intention to provide a steering support member structure which enables an air conditioner ducts and a steering support member structure to be arranged, not interfering each other in the state that various instruments are actually closely arranged inside an instrument panel with almost no interspace, while ensuring a space for arranging a rear duct and workability for arranging it.

Various parts including the steering column, the air conditioner unit, the airbag module, the audio unit, etc. are attached to the steering support member structure arranged substantially along the vehicle width direction in the front portion of the vehicle interior. When the steering support member strucutre is constituted by the iron pipes, the fitting brackets are welded, as separate parts, to the iron pipes, and these vehicle parts are attached to the iron pipes indirectly via the fitting brackets welded. See JP2001-1946A.

Since it is difficult to weld the fitting brackets to the light alloy-constituted steering support member structure, a fixing structure for the fitting brackets needs to be investigated.

There is also an intention to solve the above problem by adapting a particular fixing structure for a fitting bracket in the light alloy-constituted steering support member structure.
It is an object of the present invention to provide a steering support member structure as indicated above having high strength and can ensure stable operation of the steering.
According to the present invention said object is solved by a steering support member structure having the features of independent claim 1. Preferred embodiments are laid down in the dependent claims.

According to a further embodiment, it is provided the steering support member structure comprising a steering support member body constituted by a light alloy and configured to be arranged substantially in a vehicle width direction inside a front portion of a vehicle interior, said alloy-constituted steering support member body being divided into a first member having a driver seat side portion and a central portion and a second member having a front passenger seat side portion.

The following embodiments are preferred according to said aspect
(1) A dividing portion of the light alloy-constituted steering support member body is provided with a connecting portion comprising a box-shaped insertion portion and a receiving portion into which the insertion portion is to be engaged substantially in the vehicle width direction.

(2) In the above (1), the receiving portion comprises a stopper face at a deep portion thereof, said stopper face being configured to restrict an engaged amount of the insertion portion, said insertion portion comprises a stepped portion lockable at an inlet portion of the receiving portion in a fitting direction, and said stepper face and said stepped portion enable insertion fitting. The wording "insertion fitting" is a well-established technical wording, which means that a projection on one member is fitted into a recess on another member by insertion or pressing.

While it would be difficult and costly to produce an elongate steering support member body from the light alloy in connection with a die and a casting equipment, according to the first aspect of the present invention, the alloy-constituted steering support member body is divided into the first member having the driver seat side portion and the central portion and the second member having the front passenger seat side portion, it is possible to produce the elongate steering support member structure and to reduce the cost. Further, since the steering support member body is divided into the driver seat side portion and the central portion requiring strength and the front passenger seat side not requiring large strength, the optimum divided state meeting their functions can be realized.

According to the preferred embodiment (1), the dividing portion of the light alloy-constituted steering support member body comprises the connecting portion, which comprises the box-shaped insertion portion and the receiving portion into which the insertion portion is to be engaged substantially in the vehicle width direction. Consequently, the desired connecting strength can be obtained. In particularly, since the insertion portion is designed in a box shape, strength can effectively ensured and set.

According to the preferred embodiment (2), the receiving portion comprises the stopper face, at the deep portion thereof, configured to restrict the engaged amount of the insertion portion, the insertion portion comprises the stepped portion lockable at the inlet portion of the receiving portion in the fitting direction, and the stepper face and the stepped portion enable insertion fitting. Consequently, the steering support member structure gives the structure which can ensure high rigidity against a load inputted sideways.

According to a further embodiment, it is provided an airbag fitting structure comprising a steering support member constituted by a light alloy and configured to be arranged substantially in a vehicle width direction inside a front portion of a vehicle interior, and an airbag module fitting portion provided at the steering support member, wherein the light alloy-constituted steering support member has a U-letter shaped section as viewed sideways, and the airbag module fitting portion partially has an inverse U-letter shaped section.

According to said aspect, it is preferable that the airbag module fitting portion having the inverse U-letter shaped section has a portion opened toward a rear side of the vehicle.

According to said aspect, when the airbag module fitting portion partially having the inverse U-letter shaped section is provided for the light alloy-constituted U-letter shaped section as viewed sideways, the rigidity of the airbag module fitting portion and its vicinity can be enhanced. Thereby, the airbag module can be stably fitted.

The term "partially" means that the steering support member has the U-letter shape as viewed from the side, which shape is fundamentally opened on the front side of the vehicle, and only the airbag fitting portion has the inverse U-letter shape.

It has been conventionally required that an airbag module-fitting place is provided at a position lower than an upper face of the steering support member on the vehicle front side of the steering support member under the consideration of a molded surface of the instrument panel, the place of the steering support member, etc. The steering support member according to the second aspect of the present invention is opened, in the form of a U-letter, toward the front side of the vehicle. If only the fitting portion of the airbag module is merely formed as a face downwardly inclined toward the front side of the vehicle, it is feared that rigidity of the steering support member decreases. Thus, the fitting portion of the airbag module is formed in the inverse U-letter shape. Upper and lower faces of the opposite side portions of the fitting portion of the airbag module can be connected together to increase strength.

According to the preferred embodiment of said aspect, the airbag module-fitting portion has the inverse U-letter shaped section with the opened portion toward the rear side of the vehicle, the opened portion functions as a observation window at the time of fitting air bag module from rear side of the vehicle. Thus, while the interior is being observed through the observation window, the airbag module can be fitted. Thereby, the fitting workability can be largely enhanced.

According to a further embodiment, it is provided a steering support member structure comprising a steering support member body to be placed substantially in a vehicle width direction in a front part of a vehicle interior, fitting brackets provided at opposite ends of the steering support member body and configured to be fitted to the vehicle body, said steering support member body and said fitting brackets being constituted by a light alloy, wherein the light alloy-constituted steering support member body has a U-letter shape opened to a front side of the vehicle as viewed sideways, and the light alloy-constituted fitting bracket has a U-letter shaped section capable of forming a box-like section between the vehicle body.

According to said aspect, since the light alloy-constituted steering support member body has the inversed U-letter shape opened to the front side of the vehicle as viewed from the side, the steering support member body can be formed in such a structure as easily absorbing a load inputted from the front side of the vehicle, while ensuring the rigidity of the steering support member body. Further, a part of a dusts can be covered with the steering support member body having the U-letter shape as viewed sideways, the space inside the instrument panel can be more effectively utilized, and the assembling workability of the steering support member to the vehicle body is enhanced. On the other hand, since the light alloy-constituted fitting bracket has the U-letter shape opened outwardly in the vehicle width direction, the thickness of the bracket can be increased and form the box-like section between the vehicle body. Thus, the fitting strength of the steering support member to the vehicle body can be enhanced. In addition, as the bracket is thickened, the thickness of a guide portion on the side of the vehicle body can be correspondingly increased, so that strength and fitting workability can be enhanced.

The term "U-letter shaped section" means that the fitting bracket exhibits a U-letter shaped (channel-shaped) section when the fitting bracket is cut along a plane in parallel to the width direction of the vehicle interior.

The novel structure suitable to be cast is realized by the countermeasure that the steering support member body placed substantially along the vehicle width direction in the front portion of the vehicle and the vehicle body-fitting brackets provided at the opposite ends the steering support member are constituted by the light alloy, the light alloy-constituted steering support member body has the inversed U-letter shape opened toward the front side of the vehicle body as viewed from sideways, and the light alloy-constituted fitting bracket has the U-letter shaped section capable of forming the box-like section between the vehicle body.

According to a further embodiment, it is provided a steering support member structure comprising a steering support member body constituted by a light alloy and configured to be arranged in a vehicle width direction in a front portion of a vehicle interior, said light alloy-constituted steering support member body comprising a rear duct capable of retaining a rear duct.

According to a preferred embodiment of said aspect, the steering support member structure comprises the steering support member body and a stay supporting a central portion of the steering support member body, and the rear duct retaining portion is formed at a corner between the steering support member body and the stay.

According to said aspect, since the rear duct is retained and guided by means of the rear duct-retaining portion provided at the steering support member body, the rear duct can be rationally arranged and the arranging workability of the rear duct can be easily attained, while avoiding the interference with the steering support member body.

According to a preferred embodiment of said aspect, the rear duct-retaining portion is formed at a corner portion between the steering support member body and the stay, the pavement and arranging workability of the rear duct can be further enhanced, the rear duct can be stably fitted, and the space inside the instrument panel can be effectively utilized.

The rear duct can be easily held, guided and arranged by the countermeasure that the steering support member body arranged along the vehicle width direction inside the front portion of the vehicle interior is made of the light alloy and comprises the rear duct-retaining portion which can retain the rear duct.

According to a further embodiment, it is provided a steering support member structure comprising a steering support member body arranged in a vehicle width reaction in a front portion of the vehicle interior and constituted by a light alloy, and a fitting bracket temporarily retaining portion capable of temporarily retaining a fitting bracket which is to attach a vehicle-fitted part, said steering support member body and said fitting bracket temporarily retaining portion being integrally formed.

The following are preferred embodiments of said aspect
(1) The fitting bracket temporarily retaining portion is a stopping hole having an almost T-letter shaped form as viewed from a plane and integrally formed with the light alloy-constituted steering support member body.

(2) The stopping hole having the almost T-letter shape as viewed in plane is formed above a fitting bracket fixing face provided at the steering supporting member body, and is adapted to temporarily retain the vehicle-mount part fitting bracket in a suspended state.

According to said aspect, since the light alloy-constituted steering support member body is provided with the fitting bracket temporarily retaining portion which can temporarily retain the vehicle-mount part-fitting bracket, the vehicle-mount parts fitting bracket is temporarily retained and then fixed, the effectively fixing structure can be obtained for the vehicle-mount part fitting bracket in the light alloy-constituted steering support member body, free from troublesome. Thereby, the vehicle-mount parts can be easily attached.

According to the preferred embodiment (1) of said aspect, the stopping hole having the almost T-letter shape as viewed in plane is integrally formed in the light alloy-constituted steering support member body as the fitting bracket temporarily retaining portion, the vechile part fitting bracket can be easily temporarily retained merely by fixing the vehicle-mount part fitting bracket to the fixing hole.
Further, since the fixing portion having the almost T-letter shape as viewed in plane can be formed at high precision and functions to locate the position in the right and left directions. Thus, the vehicle-mount part fitting bracket can be easily temporarily retained and then fixed. Moreover, the stopping hole having the almost T-letter shape as viewed in plane can be integrally formed free from great labor, which is structurally optimum for the steering support member body.

According to the preferred embodiment (2) of said aspect, since the stopping hole having the almost T-letter shape as viewed sideways is formed above the fitting bracket fixing face provided at the steering supporting member formed at the steering support member body, the vehicle-mount parts fitting bracket can be temporarily retained in the suspended state, thereby realizing the stable temporarily retained state. In addition, since the vehicle-mount part fitting bracket temporarily retained in the suspended state can be seated at the fitting bracket fixing face set at the steering support member body with high positional precision. Thus, the vehicle-mount part fitting bracket can be immediately fixed as it is.

Hereinafter, the present invention is illustrated and explained by means of preferred embodiments in conjunction with the accompanying drawings. In the drawings wherein:
Fig. 1 is a perspective view of a whole steering support member structure according to Embodiment 1 of the present invention as viewed from a rear side of a vehicle.
Fig. 2 is a decomposed, perspective view of Fig. 1 as partially enlarged.
Fig. 3 is a perspective view of Fig. 2 as viewed from a front side of the vehicle.
Fig. 4 is a perspective view showing an assembled state of Fig. 3.
Fig. 5 is a partially enlarged, perspective view of a steering support member structure according to Embodiment 2 of the present invention as viewed from the rear side of the vehicle.
Fig. 6 is a partially enlarged, perspective view of Fig. 5 as viewed from a lower side.
Fig. 7 is a partially enlarged, perspective view of Fig. 5 as viewed from the front side of the vehicle.
Fig. 8 is a partially enlarged, perspective view of Fig. 7 as viewed from a lower side.
Fig. 9 is a sideways sectional view of an airbag module fitting portion.
Fig. 10 is a perspective view illustrating a fitted state of the airbag module.
Fig.11 is a perspective view of a steering support member structure according to Embodiment 3 of the present invention as viewed from an obliquely front side of the vehicle.
Fig. 12 is a perspective view of a duct unit to be fitted to a steering support member structure according to Embodiment 4 of the present invention.
Fig. 13 is a perspective view of Fig. 12 as viewed from a bottom face side.
Fig. 14 is a partially enlarged, perspective view of a steering support member to which the duct unit is fitted.
Fig. 15 is a partially enlarged, perspective view of Fig. 14 to which a tip portion of a rear duct is attached.
Fig. 16 is a partially enlarged, perspective view of a steering support member structure according to Embodiment 5 of the present invention.

### (Embodiment 1)

The object to provide the steering support member structure constituted by the inexpensive and functional light alloy is realized by constituting the steering support member, to be arranged substantially along the vehicle width direction in the front portion of the vehicle interior, with the light alloy and dividing the light alloy-constituted steering support member into the first member having the driver seat side portion and the central portion and the second member having the front passenger seat portion.

Embodiment 1 embodying the present invention will be explained together with illustrated examples.

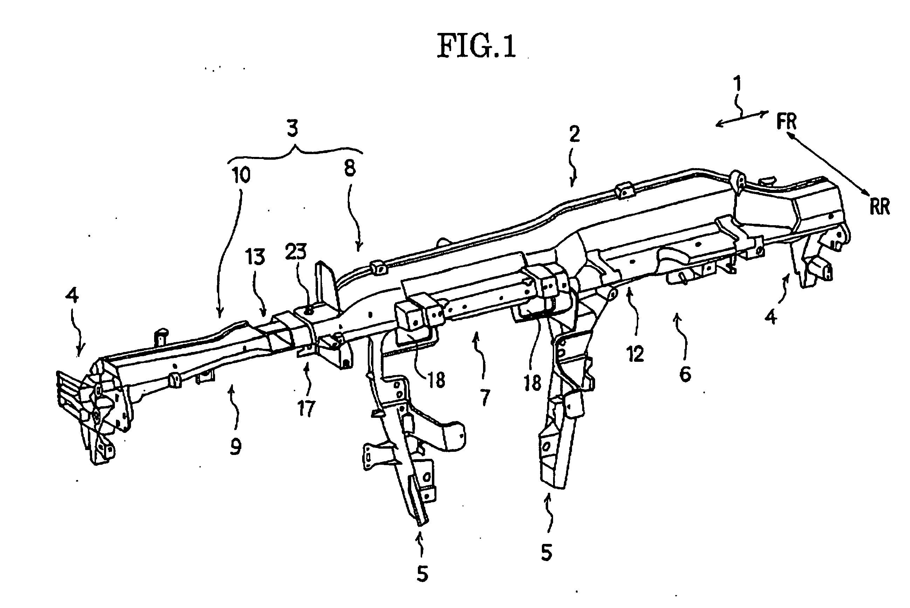

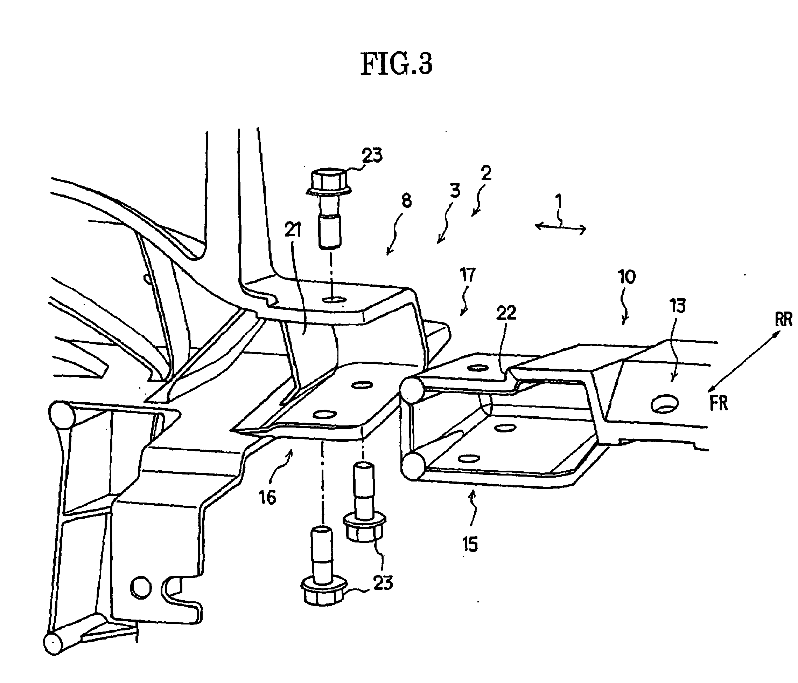

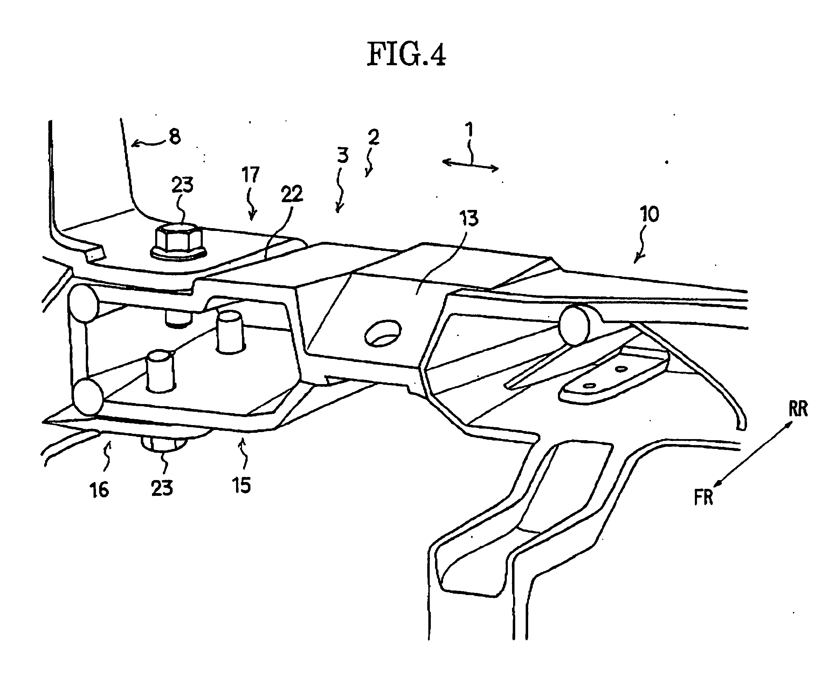

Fig. 1 to Fig. 4 illustrate Embodiment 1 according to the present invention.

First, the construction will be explained. In to a vehicle such as an automobile is arranged a reinforcing member such as a steering support member structure 2, which is extended substantially along a vehicle width direction 1 in a front portion of a vehicle interior and connects right and left sides of a vehicle body. The steering support member structure 2 is placed inside an instrument panel. The steering support member structure 2 mainly comprises a steering support member body 3 extending substantially along the vehicle width direction 1, vehicle body-fitting brackets 4 provided at opposite ends of the steering support member body 3, and stays 5 to support an intermediate portion of the steering support member body 3 onto a floor panel. The stays are provided in pair on right and left sides.

In this embodiment, the steering support member structure 2 is made of a light alloy. More specifically, the steering support member structure 2 is constituted by the light alloy such as a magnesium alloy or an aluminum alloy. The steering support member structure 2 is produced by casting.

The steering support member body 3 of the light alloy-constituted steering support member structure 2 is divided into a first member 8 having a driver seat side portion 6 and a central portion 7 and a second member 10 having a front passenger seat side portion 9.

The driver seat side portion 6 is provided with a column fitting portion 12 to fit a steering column thereto. At an end portion of the driver seat side portion 6 is provided one of the fitting bracket 4 which is to be to fitted to a side wall face of the vehicle body The stays 5 are provided at the central portion 7 in pair at right and left sides. To the stays are attached an audio unit, an air conditioner, etc. The first member 8 is integrally formed with the column fitting portion 12, one of the fitting brackets 4, the stays 5, etc. On the other hand, the front passenger seat side portion 9 is provided with an airbag module fitting portion 13 for fitting an airbag module thereto. The other fitting bracket 4 is provided at an end portion of the front passenger seat side portion 9. For this purpose, the second member 10 is integrally provided with the airbag module fitting portion 13, the other fitting bracket 4, etc.

Owing to the above construction, the first member 8 needs strength, because heavy parts such as the steering column, the audio unit, the air conditioner, etc. are fitted thereto. Thus, the sectional shape of the first member **8** is made relatively large to ensure desired strength. On the hand, since second member 10 does not need great strength, its sectional shape is made relatively small, thereby reducing the weight. In this case, the steering support member **structure** 2 is a cast product made of the light alloy, and a front side of the steering support member body 3 is formed in a U-letter sectional shape opened toward the front side as viewed sideways. That is, when the steering support member structure **2** is fitted to the vehicle body, the U-letter shaped opening is opened **0** and laid laterally. The term "U-letter shaped" includes a case where two sides of the U-letter are in parallel to each other, a case where two sides of the U-shape are outwardly expanded or a case where two sides of the U-shape are inwardly approach to each other. This term also includes not only a case where the shape is smoothly continued, but also a case where the shape is polygonal, and forms a U-letter shape as a whole (The term "inverse U-letter shape" means same or similar meanings).

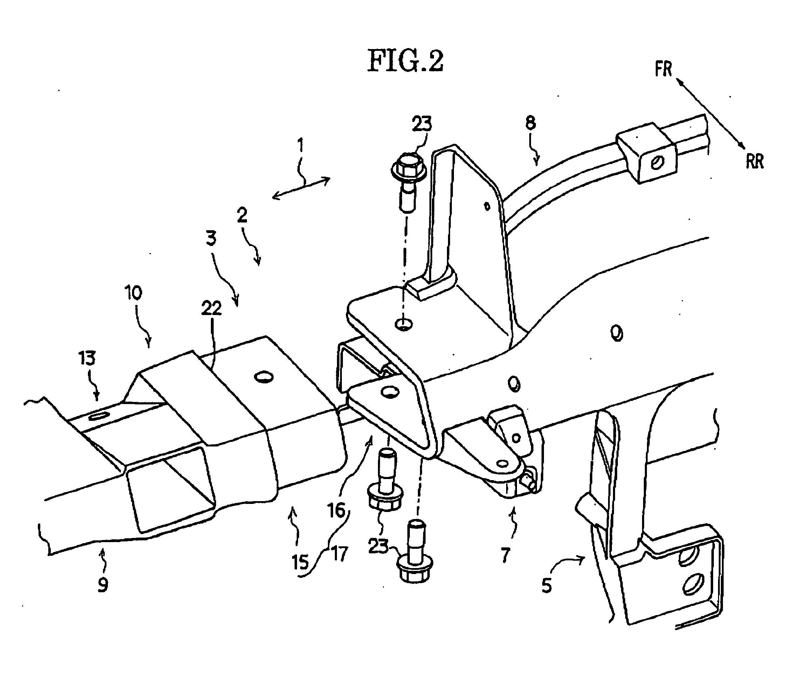

As shown in Fig. 2 to Fig. 4, a connecting portion 17 is provided at a divided portion of the light alloy-constituted steering support member structure 2. The connecting portion 17 comprises a box-shaped insertion portion 15 and a receiving portion **16** into which the insertion portion 15 is engageable substantially in the vehicle width direction. The insertion portion 15 and the receiving portion 16 may be on either sides of the divided portion. It is preferable structurally and from the standpoint of ensuring the connecting strength that the insertion portion 15 is located on a side of the second member 10 having the smaller sectional shape and the receiving portion 16 is located on a side of the first member 8 having the larger sectional shape.

Particularly, in the connecting portion 17, the receiving portion 16 has a stopper face 21, at its deep portion, to restrict an engaged amount of the insertion portion 15, whereas the insertion portion 15 has a stepped portion 22 at which the insertion portion 15 can be stopped at an inlet portion of the receiving portion 16 in the inserting direction (substantially in the vehicle width direction in this embodiment), thereby enabling an insertion fitting. The stepped portion 22 is provided at an upper side of the insertion portion 15 in the drawings, but such stepped portion(s) may be provided at a lower side or upper and lower sides. In the drawings, a reference numeral 18 denotes a rear duct-retaining portion.

The connecting portion 17 between the first member 8 and the second member 10 is fixable with bolts 23 after the insertion portion 15 is combined with the receiving portion 16. Although totally three bolts 23, i.e., one upper bolt and two lower bolts, are used according to the illustrated embodiment, the number of the bolts 23 can be adjusted as needed. Further, the upper and lower bolts 23 are arranged in a staggered fashion, which enables an effective tightened state with a smaller number of the bolts.

Next, the function of this embodiment will be explained.

The light alloy-constituted steering support member **structure** 2 is assembled by insertion fitting the insertion portion 15 of the second member 10 into the receiving portion 16 of the first member 8 in the engaging direction until the tip of the insertion portion 15 abuts the stopper face 21 at the deep portion of the receiving portion 16 and the stepped portion 22 of the insertion portion 15 is stopped by the inlet portion of the receiving portion 16. After the insertion portion 15 is combined with the receiving portion 16, they are fixed with the bolts 23. Thereby, the elongate steering support member 2 is completed.

It would be difficult and costly to produce the light alloy-constituted steering support member structure in connection with the die and the casting equipment. According to this embodiment, the support member structure is divided into the first member 8 having the driver seat side portion 6 and the central portion 7 and the second member 10 having the front passenger seat side 9 and then they are assembled together, so that the production cost can be reduced. The driver seat side portion 6 and the central portion 7 requiring strength is separated, at the dividing position, from the front passenger seat side portion not requiring great strength, thereby realizing the optimum divided state meeting the functions.

Further, the dividing portion of the light alloy-constituted steering support member structure 2 is designed as the connecting portion 17 composed of the box-like insertion portion 15 and the receiving portion 16 into which the insertion portion 15 is engageable almost in the vehicle width direction 1. Thereby, desired connection strength can be obtained. Particularly, strength can be effectively ensured and set by designing the insertion porton 15 in the box form.

Further, the receiving portion 16 has at its deep portion the stopper face 21 to restrict the engaged amount of the insertion portion 15, and the insertion portion 15 has the stepped portion 22 capable of be stopped at the inlet portion of the receiving portion 16 in the engaging direction, and the insertion portion 15 is insertable into the receiving portion 16. Thus, the support member structure has a structure capable of ensuring high rigidity against the load inputted from the side direction. This is particularly effective when the member body 3 23 has an open section (the U-letter shaped section opened toward the front side as viewed sideways) of the member body 3 through casting.

### (Second embodiment 2)

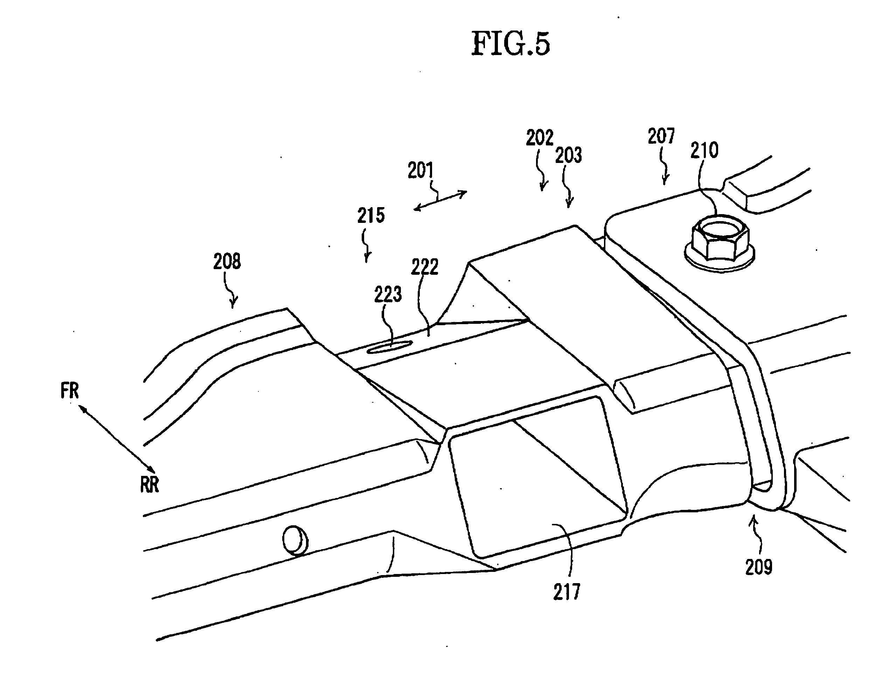

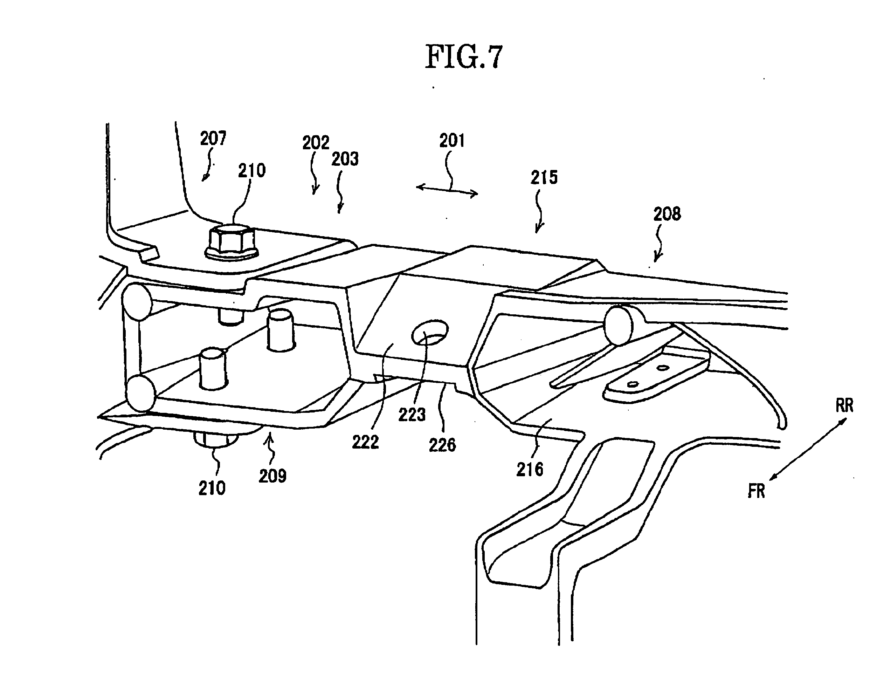

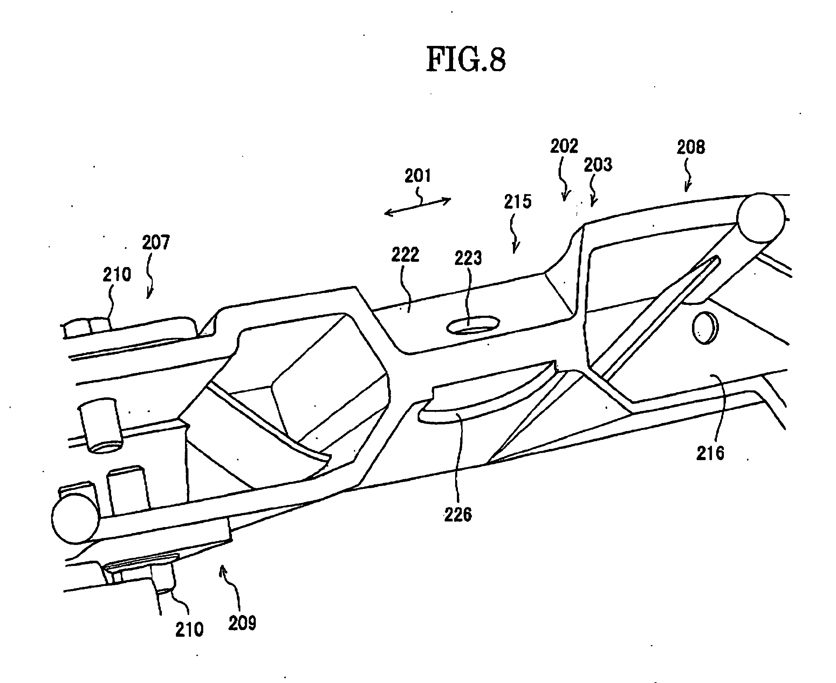

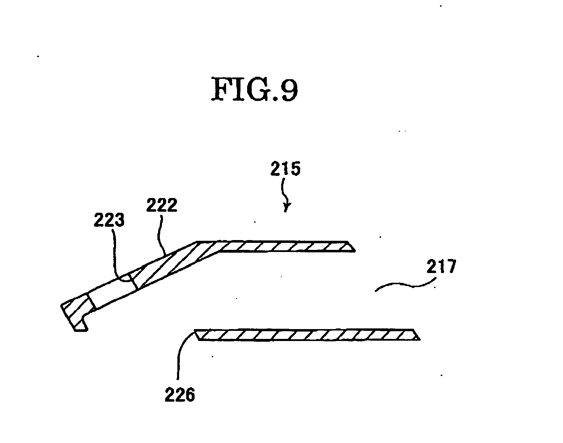

Embodiment 2 of the steering support member structure according to the present invention will be explained with reference to Figs. 5 to 10. The steering support member structure according to the present invention is fundamentally structurally identical with or similar to that of Embodiment 1 according to the steering support member structure of the present invention. The features of the steering support member structure according to Embodiment 2 will be explained below. For example, an airbag module fitting portion 215 is provided for a steering support member structure 202 made of a light alloy such as a magnesium alloy or an aluminum alloy by casting or the like.

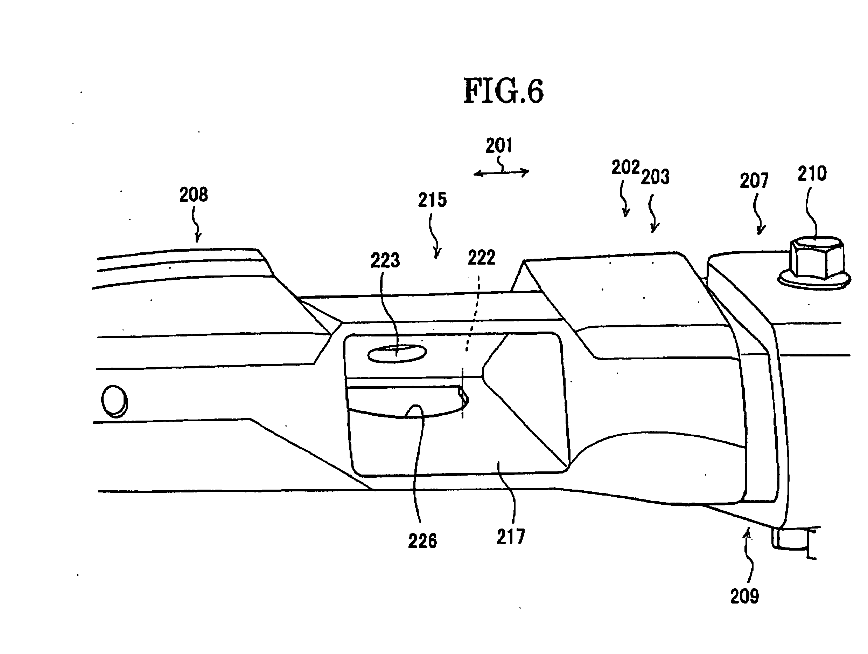

The airbag module fitting portion 215 has an almost inverse U-letter shaped section relative to the steering support member body 203 having a U-letter shaped section as viewed sideways. See Figs. 5 and 6.

That is, when the steering support member is fitted to the vehicle body, the steering support member body 203 has a portion 216 having a U-letter shaped section as viewed sideways and opened toward the front side of the vehicle from the standpoint of its structure and function. To the contrary, the airbag module fitting portion 215 having the inverse U-letter shaped section has a portion 217 opened to a rear side of the vehicle.

More specifically, the airbag module fitting portion 215 is provided in the second member 208 at a position near the connection portion 209 of the steering support member body 203.

An airbag module fitting seat 222 is provided at an upper side face of the airbag module fitting portion 215 having the inverse U-letter shaped section with the opened portion 217 toward the rear side of the vehicle. An airbag module can be directly fitted to the airbag module fitting seat 222. A bolt hole 223 is formed in the airbag module fitting seat 222. The airbag module fitting seat 222 is inclined toward the front lower side of the vehicle. A working opening 226 is formed to perform screwing a bolt 225 to a lower position of the airbag module fitting seat 222 from the lower side in the airbag module fitting portion 215.

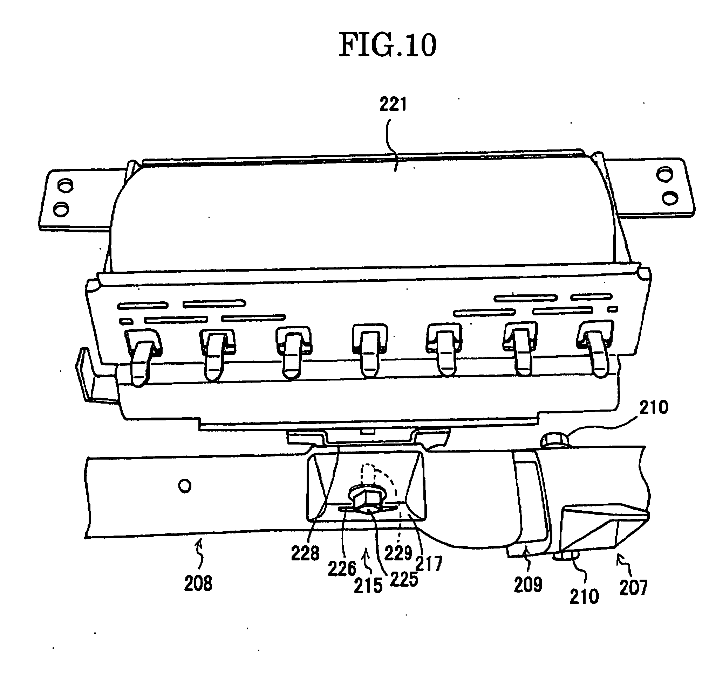

On the other hand, a lower portion of the airbag module 221 is integrally provided with a fitting bracket 228 which can be seated upon the airbag module fitting seat 222. In the fitting bracket 228 is formed a bolt hole 229 to be communicated with the bolt hole 223. See Fig. 10.

Next, the function of this embodiment will be explained.

The airbag module 221 is arranged such that the fitting bracket 228 is seated on the airbag module fitting seat 222 of the airbag module fitting portion 215 formed in a part of the steering support member structure 202. A bolt 225 is screwed through the bolt holes 223 and 229 by using the working opening 226 to fasten the airbag module fitting seat 222 to the fitting bracket 228. Thereby, the airbag module member 221 is fitted to the steering support support member structure 202. This fitting work is performed from the rear side of the vehicle.

According to this embodiment, the airbag module fitting portion 215 partially having the inverse U-letter shaped section is provided in a part of the light alloy-constituted steering support member body 203 having the U-letter shaped section as viewed sideways, so that the rigidity of the airbag module fitting portion 215 and its vicinity can be increased to enable the airbag module 221 to be stably fitted to the fitting portion.

Furthermore, since the airbag module fitting portion 215 is designed to have the inverse U-letter shaped section having the portion 217 opened rearward of the vehicle, the opened portion 217 function as an observing window from the rear side of the vehicle in the fitting work. Thus, the airbag module 221 is fitted while the interior is being observed through the observation window, thereby greatly facilitating the fitting work.

### (Embodiment 3)

Embodiment 3 of the steering support member structure according to the present invention will be explained. The steering support member structure according to the third aspect of the present invention can be structurally identical with or similar to that according to the first aspect of the present invention. In the following, the features of the steering support member structure according to Embodiment 3 will be explained.

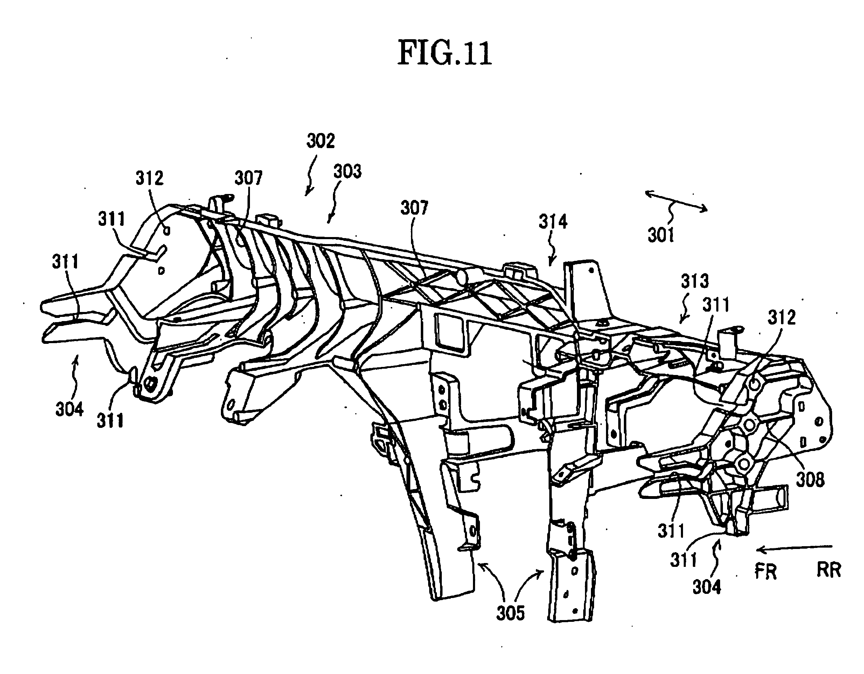

The steering support member structure according to Embodiment 3 can fundamentally take the structure shown in Fig. 1. For example, the steering support member body 303 made of a light alloy such as a magnesium alloy or an aluminum alloy by casting has a U-letter shaped section opened toward the front side of the vehicle as viewed sideways. As shown in Fig. 11, reinforcing ribs 307 can be formed appropriately inside the steering support member body 303 having the U-letter shaped section.

The fitting bracket 304 made of the light alloy is designed in a U-shaped section opened outwardly in the vehicle width direction to constitute a box-like section between a side wall of the vehicle body A reinforcing rib 308 is formed appropriately inside the fitting bracket 304 having the U-letter shape. The fitting bracket 304 arbitrarily has a guide groove 311 to be guided through a guide pin or the like on a side of the vehicle body and a bolt hole 312 to be fixed with a bolt.

Depending upon need, the member body **303** may be of a divided structure. In this embodiment, the member body **303** is divided into a first member 313 and a second member 314 between the central portion and the front passenger seat side portion.

Next, the function of this embodiment will be explained.

The steering support member **structure** 302 is attached to the front portion of the vehicle interior to connect right and left sides of the vehicle body. At this time, guide grooves 311 of fitting brackets 304 provided at opposite ends of the steering support member body 303 are guided along guides such as guide pins provided at the vehicle body and are definitely located. Then, the vehicle body and the fitting brackets 304 are fixed with the bolts through the bolt holes 312. Further, the lower ends of the stays 305 are fixed to the floor panel through brackets. By the above steps, the steering support member **structure** 302 is fitted to the vehicle body.

In this embodiment, since the light alloy-constituted steering support member body 303 is shaped in the form of the U-letter shaped section opened toward the front portion of the vehicle. While the rigidity of the steering support member body **303** is ensured, the steering support member body **303** is designed as a structure to easily absorb a load inputted from the front side of the vehicle. Further, since a part of ducts installed inside instrument panel can be covered with the steering support member body 303 having the U-letter shape as viewed sideways, the space inside the instrument panel can be effectively utilized and the fitting workability to the vehicle body can be enhanced.

On the other hand, since the light alloy-constituted fitting bracket 304 is designed in the outwardly opened U-letter shaped section, the thickness of the fitting bracket 304 is increased and the box-like section can be formed between the vehicle body and the fitting bracket, thereby enhancing the fitting strength to the vehicle body. Further, since the guide portion on the side of the vehicle body can be thickened with increase in the thickness of the fitting bracket 304, strength and fitting workability can be enhanced.

### (Embodiment 4)

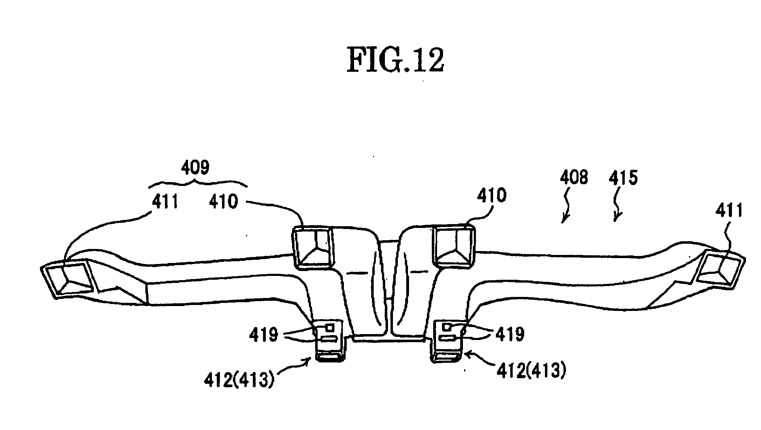

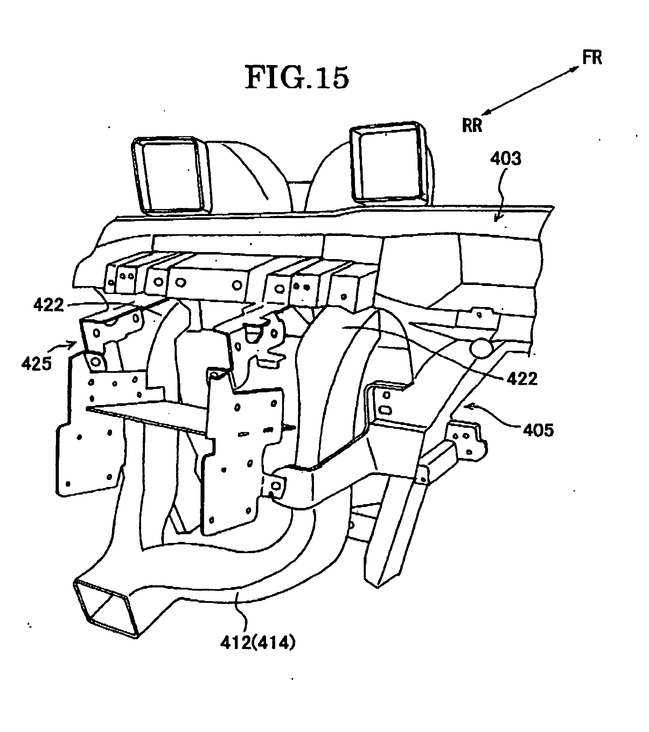

Next, Embodiment 4 of the steering support member structure according to the present invention will be explained with reference to Figs. 12 to 15. Embodiment 4 of the steering support member structure according to the present invention has fundamentally the same or similar structure as that in Embodiment 1 of the steering support member structure according to the present invention. Features of Embodiment 4 of the steering support member according to the present invention will be described below.

The steering support member shown in Fig. 1 or Fig. 11 can be used as the fundamental construction of this Embodiment 4.

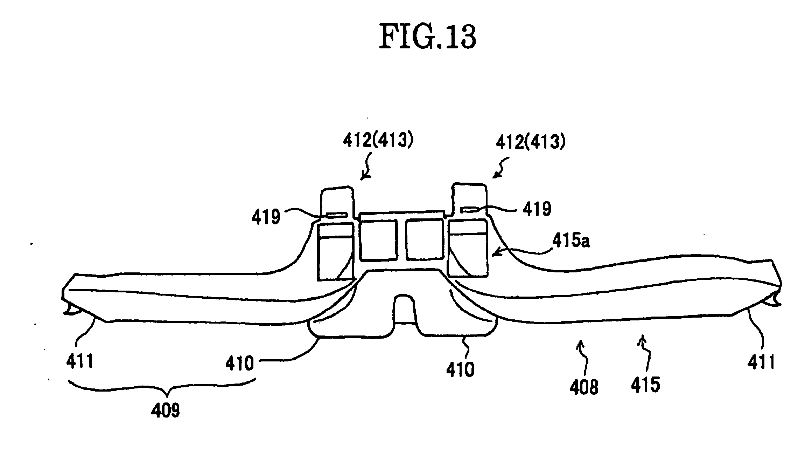

An air conditioner unit is installed inside the instrument panel. As shown in Figs. 12 and 13, various air conditioner ducts 408 are extended from the air conditioner unit. As such air conditioner ducts is included typically a front duct 409 for feeding conditioned air to the occupants in the front seats. Such a front duct 409 includes a center ventilator duct 410 connected to a center ventilator grill in a central portion of the instrument panel and side ventilator ducts 411 connected to side ventilator grills at the opposite ends of the instrument panel.

Among the air conditioner ducts 408, there is provided a rear duct 412 to feed conditioned air to occupants in rear seats. This rear duct 412 is connected to a rear ventilator grill provided at a rear portion of a center console. For example, this rear duct 412 is arbitrarily divided into a base portion 413 provided at a front side portion of the steering support member structure, a tip portion arranged inside the center console, and an intermediate portion 414 provided from a rear side of the steering support member structure to an inlet portion of the center console.

If necessary, a duct unit 415 is constituted by integrating the center ventilator ducts 410, the side ventilator ducts 411 and the base portions 413 of the rear duct 412. This duct unit 415 takes an almost branched shape in which it is branched to a center portion, side portions and a rear portion from a connecting opening 415a between the air conditioner unit. This duct unit 415 is arranged substantially along the front face aide of steering support member body 403. As shown in Fig. 1 or Fig. 11, the steering support member body 403 has substantially the U-letter shaped section opened at the front face side such that the sectional shape at the driver seat side requiring strength is larger, whereas that at the front passenger seat side not requiring large strength is smaller. The entire part or a part of the side ventilator duct 411 can be accommodated inside the steering support member at the driver seat side having the larger sectional shape. The duct unit 415 arbitrarily possess a fitting seat which is screwed to the steering support member body 403 or the instrument panel. A boss having a screw bole is arbitrarily provided at a position corresponding to the steering support member body 403 or the instrument panel.

In this embodiment, the steering support member structure which is arranged in the vehicle width direction inside the front portion of the vehicle interior is made of the light alloy. For example, the steering support member structure is made of the light alloy such as magnesium alloy or the aluminum alloy. When the steering support member structure is constituted by the light alloy, the vehicle body-fitting brackets, the stays 405, etc. are integrated with the steering support member body 403 by casting, not by welding.

The light alloy-constituted steering support member structure is provided with a rear duct retaining portion 418 capable of retaining the rear duct 412.

More specifically, the rear duct retaining portions 418 are formed at corner portions between the steering support member body 403 and the right and left stays 405, respectively.

A base portion 413 of the rear duct 412 is inserted into the rear duct retaining portion 418 in the duct unit 415. For this reason, the rear duct retaining portion 418 is formed in a closed loop shape to enclose and hold the rear duct.

On the other hand, the base portion 413 of the rear duct 412 is arbitrarily provided with a stopping projection 419 at a portion which is inserted into the rear duct retaining portion 418.

The intermediate portion 414 of the rear duct 412 is provided with a pair of connecting portions 422 which can be fitted and connected to an end of each base portion 413 inserted into the rear duct retaining portion 418 by one touch. The intermediate portion 414 of the rear duct 412 exhibits a bifurcate shape in which as the intermediate portion of the rear duct proceeds rearward, it exhibits a downwardly inclined shape and its rear ends are connected. Audio brackets 425 are arranged above the intermediate portion 414 having the downward inclination.

Next, the function of this embodiment will be explained.

The duct unit 415 is fitted to the steering support member structure in the following procedure. As shown in Fig. 13, the base portions 413 of the rear ducts 412 in the duct unit 415 are inserted into the rear duct retaining portions 418 each in the loop-like shape from the front side of the vehicle, and the stopping projections 419 provided at the base portions 413 of the rear ducts 412 are fixed to the rear duct retaining portions 418. After the base portion 413 of the rear duct 412 is held and located by the rear duct retaining portion 418, the entire duct unit 415 is turned around the base portion 413 so that the duct unit 415 may approach the steering support member structure. Thereby, the duct unit 415 is enclosed and arranged substantially along the front face of the steering support member structure, and the duct unit is fixed to the steering support member structure by screwing or the like.

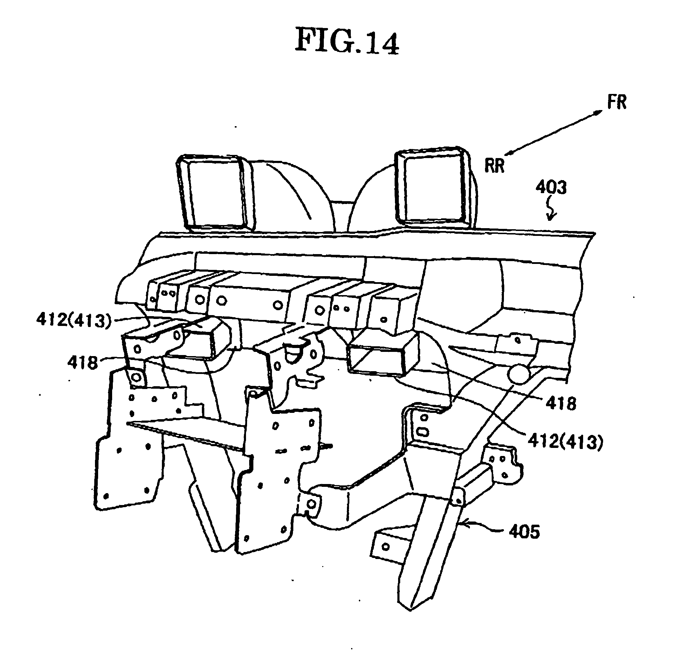

After the duct unit 415 is fitted to the steering support member structure like this, as shown in Fig. 14, the connecting portion 422 of the intermediate portion 414 of the rear duct 412 is inserted into the end portion of the base portion 413 of the rear duct 412 projecting from the rear duct retaining portion 418. The rear duct 412 is arranged in this way. Thereafter, the audio brackets 425 are fitted to the stays 405. The intermediate portion 414 of the rear duct 412 is covered with the audio unit attached to the audio brackets 425, so that the rear duct is arranged, not interfering with the audio unit.

According to this embodiment, the rear ducts are held and guided by the rear duct retaining portions 418 provided at the steering support member structure, so that the rear ducts 412 can be reasonably arranged, while avoiding interference with the steering support member structure. Thus, the rear ducts 412 and the duct unit 415 can be easily arranged.

In particular, since the rear duct retaining portions 418 are formed at the corner portions between the steering support member body 403 and the stays 405, the rear ducts 412 can be more stably handled and arranging workability can be further enhanced. In addition, adhesion between the steering support member body 403 and the rear duct 412 can be enhanced, and fitting stability for the rear ducts 412 can be enhanced, and the space inside the instrument panel can be more effectively utilized.

### (Embodiment 5)

Embodiment 5 of the steering support member structure according to the present invention will be explained. Embodiment 5 of the steering support member structure according to the fifth aspect of the present invention can be structurally identical with or similar to that according to the first aspect of the present invention. In the following, the features of the steering support member structure according to Embodiment 5 will be explained.

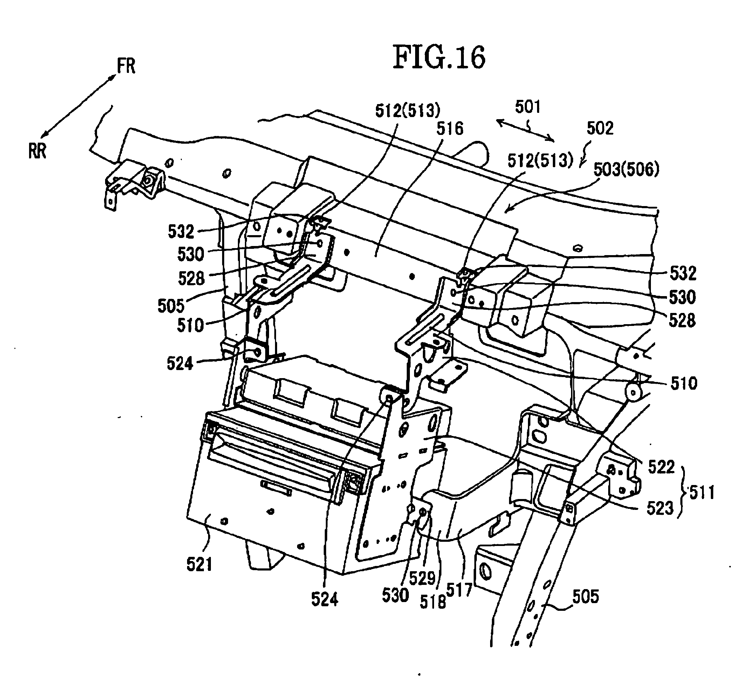

Fig. 16 shows an embodiment of this invention. The fundamental construction of Embodiment 5 is identical with or similar to that shown in Fig. 1.

In this embodiment, a light alloy-constituted steering support member structure 502 is provided with fitting bracket temporarily retaining portions 512, which can temporarily retain vehicle-mount part fitting brackets 511. The fitting bracket temporarily retaining portion 512 is provided at a position on a first member 506 to form an intermediate portion of the steering support member **structure** 502, for example.

This fitting bracket temporarily retaining portion 512 is designed as a fixing hole 513 in an almost T-letter shape as viewed in plane, and integrally formed with the light alloy-constituted steering support member **structure** 502. For example, this fixing hole 513 has an almost T-letter shape in which a head portion of the T-letter shape is located in a forward side of the vehicle, while its leg portion is located in a rearward side of the vehicle.

Further, the fixing hole 513 having an almost T-letter shape as viewed in plane is formed in an upper portion of a fitting bracket fixing face 516 set at the steering support member **structure 50**2, so that the vehicle-mount part fitting bracket 511 may be temporarily retain in a suspended state. This fitting bracket fixing face 516 is formed to fix the upper end of the vehicle-mount part fitting bracket 511.

In addition, an arm 517 is extended from each of the stays 505 in the central portion of the steering support member structure 502 and substantially toward the rear side of the vehicle, and a tip of this arm 517 is bent inwardly in the vehicle width direction to form a fitting bracket fixing face 518 for fixing a lower end side of the vehicle-mount part fitting bracket 511. Each of the fitting bracket fixing face 516, 518 is provided with a screw hole for screw fixing the vehicle-mount part fitting bracket 511.

On the other hand, the vehicle-mount part fitting bracket 511 is to fit vehicle-mount parts such as an audio unit 521. In this embodiment, the vehicle-mount part fitting bracket 512 is divided into an upper bracket portion 522 and a lower bracket portion 523. The lower bracket 523 functions as a rack to retain the audio unit 521, and the upper bracket 522 functions to support this rack on the steering support member structure 502. The upper bracket 522 and the lower bracket 523 are connected together by screw fixture (connecting portion 524). On the upper bracket 522 is provided a member fixing face 528 to be contacted with the fitting bracket fixing face 516. The lower bracket 523 is provided with a member-fixing face 529 to be contacted with the fitting bracket fixing face 518. The member fixing face 529 is located rearward of the member fixing face 528 as viewed in the forward/rearward directions. Each of the member fixing faces 528, 529 is provided with a screw hole 530 for screwing it to the steering support member structure 502. Further, a T-letter shaped fixing projection 532 is integrally projected, correspondingly to the fixing hole 513 of the fitting bracket temporarily retaining portion 512, in an upper portion of the upper bracket 522 above the member fixing face 528.

Next, the function of this embodiment will be explained.

The vehicle-mount parts such as audio unit 521 are fitted to the steering support member structure 502 as follows.

As a first countermeans, the upper bracket 522 and the lower bracket 523 are fitted in the state that they are connected together. In this state, the lower bracket 523 is fitted to the vehicle-mount part such as the audio unit 521, and the upper bracket 522 and the lower bracket 523 are connected together to integrate the vehicle-mount part fitting bracket 511. Then, the T-letter shaped engaging projection 532 of the upper bracket 522 is fitted into the fixing hole 513 having the almost T-letter shape as viewed in plane in the steering support member **structure** 502 from the upper side. Then, when the vehicle-mount part fitting bracket 511 is slightly forward and downwardly turned around the fixing hole 513, the member fixing faces 528 and 529 of the vehicle-mount part fitting bracket 511 are contacted with the fitting bracket fixing faces 516 and 518 of the steering support member structure 502 from the rear side, thereby stopping the rotation. By so doing, the vehicle-mount part such as the audio unit 521 and the vehicle-mount part fitting bracket 511 are suspended by means of the fixing hole 513 and the engaging projection 532 with respect to the steering support member structure 502. The vehicle-mount part is supported by the vehicle-mount part fixing faces 516, 518 and the member fixing faces 528, 529 at totally four points consisting of two upper and lower points and two right and left points. Since a given plane pressure is applied between the fitting bracket fixing faces 516 and 518 and the member fixing faces 528 and 529, respectively, due to the load of the vehicle-mount part such as the audio unit 521, the temporarily retained state can be stably realized. Finally, the vehicle-mount part such as the audio unit 512 is fixed to the steering support member structure 502 via the vehicle-mount part fitting brackets 511 by fixing, with screws, between the fitting bracket fixing faces 516 and 518 and the member-fixing faces 528, 529.

As a second countermeasure, the upper bracket 522 and the lower bracket 523 can be separately fitted. In this case, the upper bracket 522 is temporarily retained by the first member 506 of the steering support member structure 502 through the utilization of the fixing hole 513 and the engaging projection 532 as similarly in the above, and then the fitting bracket fixing face 516 and the member fixing face 528 are fixed together with the screw Then, the lower bracket 523 to which is fitted the vehicle-mount part such as the audio unit 521 is connected to the upper bracket 522. Thereby, the vehicle-mount part fitting bracket 511 is integrated, and the vehicle-mount part is fixed to the arm 517 of the stay 505 by fixedly screwing the fitting bracket fixing face 518 to the member fixing face 529.

In this way, according to this embodiment, since the light alloy-constituted steering support member structure 502 is provided with the fitting bracket temporarily retaining portion 512 which can temporarily retaining the vehicle-mount part fitting bracket 511, the vehicle-mount part fitting bracket 511 is temporarily retained and then fixed. Thereby, the effectively fixing structure for the vehicle-mount part fixing bracket can be realized without great labor with respect to the light alloy-constituted steering support member 502 not suitable for welding. Therefore, the vehicle-mount part such as the audio unit 521 can easily fitted.

Further, since the fixing hole 513 having the almost T-letter shape as viewed in plane is integrally formed as the fitting bracket temporarily retaining portion 512 in the light alloy-constituted steering support member structure 502, such temporarily retaining can be simply effected merely by fixing the vehicle-mount part fitting bracket 511 to the fixing hole 513 having the almost T-letter shape as viewed in plane. In addition, the fixing hole 513 having the almost T-letter shape as viewed in plane can be formed at high precision, and performs locating function in lateral directions, so that operations from the temporary retaining to the fixing can be easily performed. Further, the fixing hole having the almost T-letter shape as viewed in plane can be integrally formed reasonably, which is structurally optimum for the light alloy-constituted steering support member 502.

Moreover, since the fixing hole 513 having the almost T-letter shape is formed in an upper portion of the fitting bracket fixing face 516 set at the steering support member 502, the vehicle-mount part fixing bracket 511 can be temporarily retained in the suspended state, thereby realizing the stably temporarily retained state. In addition, since the vehicle-mount part fitting bracket 511 temporarily retained in the suspended state can be seated on the fitting bracket fixing face 516 provided at the steering support member 502 at highly positional accuracy, it can be fixed immediately as it is.

## Claims

1. A steering support member structure comprising a steering support member body (3,203,303,403,503) constituted by a light alloy and configured to be arranged substantially in a vehicle width direction (1,201,301,501) inside a front portion of a vehicle interior, said alloy-constituted steering support member body (3,203,303,403,503) being divided into a first member (8,313,506) having a driver seat side portion (6) and a central portion (7) and a second member (10,208,314) having a front passenger seat side portion (9), the driver seat side portion (6) is provided with a column fitting portion (12) to fit a steering column thereto, **characterized by**
a stay (5,305,405,505) provided at the central portion (7) to support the steering support member body (3,203,303,403,503) onto a floor panel, wherein the first member (8,313,506) is integrally formed with the column fitting portion (12) and the stay (5,305,405,505) by casting.

2. A steering support member structure according to claim 1, **characterized in that** a dividing portion of the light alloy-constituted steering support member body (3,203,303,403,503) is provided with a connecting portion (17) comprising a box-shaped insertion portion (15) and a receiving portion (16) into which the insertion portion (15) is to be engaged substantially in the vehicle width direction (1,201,301,501).

3. A steering support member structure according to claim 2, **characterized in that** the receiving portion (16) comprises a stopper face (21) at a deep portion thereof, said stopper face (21) being configured to restrict an engaged amount of the insertion portion (15), said insertion portion (15) comprises a stepped portion (22) lockable at an inlet portion of the receiving portion (16) in a fitting direction, and said stopper face (21) and said stepped portion (22) enable insertion fitting.

4. A steering support member structure according to one of the claims 1 to 3, **characterized by** an airbag module fitting portion (13,215) provided at said steering support member body (3,203,303,403,503) and wherein said steering support member body (3,203,303,403,503) has a U-letter shaped section as viewed from a side and said airbag module fitting portion (13,215) partially has an inverse U-letter shaped section.

5. A steering support member structure according to claim 4, **characterized in that** the airbag module fitting portion (13,215) having the inverse U-letter shaped section comprises a portion (217) opened toward a rear side of the vehicle.

6. A steering support member structure according to one of the claims 1 to 5, **characterized by** vehicle body fitting brackets (304) made of a light alloy and provided at opposite ends of said steering support member body (303), respectively and wherein said steering support member body (303) has a U-letter shaped section as viewed from a side and opened toward a front side of the vehicle and each of said fitting brackets (304) made of the light alloy has a U-letter shaped section to form a box-like section between the brackets and the vehicle body.

7. A steering support member structure according to one of the claims 1 to 6, **characterized by** a rear duct retaining portion (418) at said steering support member body (403), said rear duct retaining portion (418) being configured to retain a rear duct (412).

8. A steering support member structure according to claim 7, **characterized in that** said rear duct retaining portion (418) is formed at a corner portion between the steering support member body (403) and the stay (405).

9. A steering support member structure according to one of the claims 1 to 8, **characterized by** a fitting bracket temporarily retaining portion (512) at said steering support member body (503), said fitting bracket temporarily retaining portion (512) being configured to temporarily retain a vehicle-mount part fitting bracket (511).

10. A steering support member structure according to claim 9, **characterized in that** said fitting bracket temporarily retaining portion (512) is a fixing hole (513) integrally formed in the steering support member body (503) of the light alloy and having an almost T-letter shape as viewed in plane.

11. A steering support member structure according to claim 10, **characterized in that** said fixing hole (513) having the almost T-letter shape as viewed in plane is formed in an upper portion of a fitting bracket fixing face (516) provided at the steering support member body (503), said fixing hole (513) being configured to temporarily retain the vehicle-mount part fitting bracket (511) in a suspended state.

## Patentansprüche

1. Lenkstützgliedaufbau, aufweisend einen Lenkstützgliedkörper (3, 203, 303, 403, 503), gebildet durch eine Leichtlegierung und konfiguriert, um im Wesentlichen in einer Richtung (1, 201, 301, 501) der Fahrzeugbreite innerhalb eines vorderen Abschnittes eines Fahrzeuginneren angeordnet zu sein, wobei der legierungsgebildete Lenkstützgliedkörper (3, 203, 303, 403, 503) geteilt ist in ein erstes Teil (8, 313, 506) mit einem Fahrersitz- Seitenabschnitt (6) und einem Mittelabschnitt (7) und ein zweites Teil (10, 208, 314) mit einem vorderen Fahrgastsitz- Seitenabschnitt (9), wobei der Fahrersitz- Seitenabschnitt (6) mit einem Säuleneinsetzabschnitt (12) versehen ist, um darin eine Lenksäule aufzunehmen,
**gekennzeichnet durch**
eine Strebe (5, 305, 405, 505), vorgesehen an dem Mittelabschnitt (7), um den Lenkstützgliedkörper (3, 203, 303, 403, 503) auf einem Bodenpanel zu stützen, wobei das erste Teil (8, 313, 506) einstückig gebildet ist mit dem Säuleneinsetzabschnitt (12) und der Strebe (5, 305, 405, 505) **durch** Gießen.

2. Lenkstützgliedaufbau nach Anspruch 1, **dadurch gekennzeichnet, dass** ein Teilungsabschnitt des legierungsgebildeten Lenkstützgliedkörpers (3, 203, 303, 403, 503) mit einem Verbindungsabschnitt (17) versehen ist, der aufweist einen kastenförmigen Einsetzabschnitt (15) und einen Aufnahmeabschnitt (16), in den der Einsetzabschnitt (15) im Wesentlichen in Richtung (1, 201, 301, 501) der Fahrzeugbreite eingesetzt wird.

3. Lenkstützgliedaufbau nach Anspruch 2, **dadurch gekennzeichnet, dass** der Aufnahmeabschnitt (16) eine Anschlagsfläche (21) an einem tiefen Abschnitt desselben aufweist, wobei die Anschlagsfläche (21) konfiguriert ist, einen Eingriffsbetrag des Einsetzabschnittes (15) zu begrenzen, wobei der Einsetzabschnitt (15) einen gestuften Abschnitt (22) aufweist, der an einem Einlassabschnitt des Aufnahmeabschnittes (16) in einer Einsetzrichtung verriegelbar ist, und die Anschlagsfläche (21) und der gestufte Abschnitt (22) das Einsetzeinpassen ermöglichen.

4. Lenkstützgliedaufbau nach einem der Ansprüche 1 bis 3, **gekennzeichnet durch** einen Luftsackmodul- Einsetzabschnitt (13, 215), vorgesehen an dem Lenkstützgliedkörper (3, 203, 303, 403, 503), und wobei der Lenkstützgliedkörper (3, 203, 303, 403, 503) einen U- förmigen Querschnitt, wenn von einer Seite gesehen, und der Luftsackmodul- Einsetzabschnitt (13, 215) teilweise einen umgekehrten U-förmigen Querschnitt hat.

5. Lenkstützgliedaufbau nach Anspruch 4, **dadurch gekennzeichnet, dass** der Luftsackmodul- Einsetzabschnitt (13, 215), der einen umgekehrten U- förmigen Querschnitt hat, einen Abschnitt (217), geöffnet in Richtung zu der hinteren Seite des Fahrzeuges, aufweist.

6. Lenkstützgliedaufbau nach einem der Ansprüche 1 bis 5, **gekennzeichnet durch** Fahrzeugkarosserie- Einsetzhalter (304), hergestellt aus einer Leichtlegierung und jeweils vorgesehen an gegenüberliegenden Enden des Lenkstützgliedkörpers (303) und wobei der Lenkstützgliedkörper (303) einen U- förmigen Querschnitt hat, wenn von einer Seite gesehen, aufweist und in Richtung zu einer vorderen Seite des Fahrzeuges geöffnet, und jeder der Einsetzhalter (304), hergestellt aus einer Leichtlegierung, einen U- förmigen Querschnitt hat, um einen kastenförmigen Abschnitt zwischen den Haltern und der Fahrzeugkarosserie zu bilden.

7. Lenkstützgliedaufbau nach einem der Ansprüche 1 bis 6, **gekennzeichnet durch** einen hinteren Kanalrückhalteabschnitt (418) an dem Lenkstützgliedkörper (403), wobei der hintere Kanalrückhalteabschnitt (418) konfiguriert ist, einen hinteren Kanal (412) zu halten.

8. Lenkstützgliedaufbau nach Anspruch 7, **dadurch gekennzeichnet, dass** der hintere Kanalrückhalteabschnitt (418) an einem Eckabschnitt zwischen dem Lenkstützgliedkörper (403) und der Strebe (405) gebildet ist.

9. Lenkstützgliedaufbau nach einem der Ansprüche 1 bis 8, **gekennzeichnet durch** einen Einsetzhalter, der temporär den Rückhalteabschnitt (512) an dem Lenkstützgliedkörper (503) zurückhält, wobei der Einsetzhalter konfiguriert ist, temporär einen Fahrzeugmontageteil- Einsetzhalter (511) zu halten.

10. Lenkstützgliedaufbau nach Anspruch 9, **dadurch gekennzeichnet, dass** der Einsetzhalter, der temporär den Abschnitt (512) zurückhält, eine Befestigungsbohrung (513) ist, einstückig gebildet in dem Lenkstützgliedkörper (503) der Leichtlegierung und die eine nahezu T- Form hat, wenn in der Draufsicht gesehen.

11. Lenkstützgliedaufbau nach Anspruch 9, **dadurch gekennzeichnet, dass** die Befestigungsbohrung (513), die nahezu die T- Form hat, wenn in der Draufsicht gesehen, in einem oberen Abschnitt einer Einsetzhalter- Befestigungsfläche (516), vorgesehen an dem Lenkstützgliedkörper (503), gebildet ist, wobei die Befestigungsbohrung (513) konfiguriert ist, temporär den Fahrzeugmontageteil- Einsetzhalter (511) in einem hängend angeordneten Zustand zu halten.

## Revendications

1. Structure d'élément de support de direction comprenant un corps d'élément de support de direction (3, 203, 303, 403, 503) réalisé en un alliage léger et configuré pour être agencé sensiblement dans une direction de largeur de véhicule (1, 201, 301, 501) à l'intérieur d'une partie avant d'un intérieur de véhicule, ledit corps d'élément de support de direction (3, 203, 303, 403, 503) réalisé en un alliage étant divisé en un premier élément (8, 313, 506) comportant une partie latérale de siège de conducteur (6) et une partie centrale (7) et un deuxième élément (10, 208, 314) comportant une partie latérale de siège de passager avant (9), la partie latérale de siège de conducteur (6) étant pourvue d'une partie d'assemblage de colonne (12) pour assembler une colonne de direction à celle-ci, **caractérisée par**
un étai (5, 305, 405, 505) prévu dans la partie centrale (7) pour supporter le corps d'élément de support de direction (3, 203, 303, 403, 503) sur un panneau de plancher, dans laquelle le premier élément (8, 313, 506) est formé d'un seul tenant avec la partie d'assemblage de colonne (12) et l'étai (5, 305, 405, 505) par moulage.

2. Structure d'élément de support de direction selon la revendication 1, **caractérisée en ce qu'**une partie de division du corps d'élément de support de direction (3, 203, 303, 403, 503) réalisé en un alliage léger est pourvue d'une partie de liaison (17) comprenant une partie d'insertion (15) en forme de boîte et d'une partie de réception (16) dans laquelle la partie d'insertion (15) doit être engagée sensiblement dans la direction de largeur de véhicule (1, 201, 301, 501).

3. Structure d'élément de support de direction selon la revendication 2, **caractérisée en ce que** la partie de réception (16) comprend une face de butée (21) au niveau d'une partie profonde de celle-ci, ladite face de butée (21) étant configurée pour limiter une quantité d'engagement de la partie d'insertion (15), ladite partie d'insertion (15) comprend une partie étagée (22) verrouillable au niveau d'une partie d'entrée de la partie de réception (16) dans une direction d'assemblage, et ladite face de butée (21) et ladite partie étagée (22) permettent un assemblage par insertion.

4. Structure d'élément de support de direction selon l'une des revendications 1 à 3, **caractérisée par** une partie d'assemblage de module de coussin de sécurité gonflable (13, 215) prévue au niveau dudit corps d'élément de support de direction (3, 203, 303, 403, 503), et dans laquelle ledit corps d'élément de support de direction (3, 203, 303, 403, 503) a une section en forme de U tel que vu à partir d'un côté et ladite partie d'assemblage de module de coussin de sécurité gonflable (13, 215) a partiellement une section en forme de U inversé.

5. Structure d'élément de support de direction selon la revendication 4, **caractérisée en ce que** la partie d'assemblage de module de coussin de sécurité gonflable (13, 215) ayant la section en forme de U inversé comprend une partie (217) ouverte vers un côté arrière du véhicule.

6. Structure d'élément de support de direction selon l'une des revendications 1 à 5, **caractérisée par** des supports d'assemblage de carrosserie de véhicule (304) réalisés en un alliage léger et prévus à des extrémités opposées dudit corps d'élément de support de direction (303), respectivement, et dans laquelle ledit corps d'élément de support de direction (303) a une section en forme de U tel que vu à partir d'un côté et est ouvert vers un côté avant du véhicule, et chacun desdits supports d'assemblage (304) réalisés en l'alliage léger a une section en forme de U pour former une section similaire à une boîte entre les supports et la carrosserie de véhicule.

7. Structure d'élément de support de direction selon l'une des revendications 1 à 6, **caractérisée par** une partie de maintien de conduit arrière (418) au niveau dudit corps d'élément de support de direction (403), ladite partie de maintien de conduit arrière (418) étant configurée pour maintenir un conduit arrière (412).

8. Structure d'élément de support de direction selon la revendication 7, **caractérisée en ce que** ladite partie de maintien de conduit arrière (418) est formée au niveau d'une partie de coin entre le corps d'élément de support de direction (403) et l'étai (405).

9. Structure d'élément de support de direction selon l'une des revendications 1 à 8, **caractérisée par** une partie de maintien temporaire de support d'assemblage (512) au niveau dudit corps d'élément de support de direction (503), ladite partie de maintien temporaire de support d'assemblage (512) étant configurée pour maintenir temporairement un support d'assemblage de partie de montage de véhicule (511).

10. Structure d'élément de support de direction selon la revendication 9, **caractérisée en ce que** ladite partie de maintien temporaire de support d'assemblage (512) est un trou de fixation (513) formé d'un seul tenant dans le corps d'élément de support de direction (503) en alliage léger et ayant presque une forme de T tel que vu en vue plane.

11. Structure d'élément de support de direction selon la revendication 10, **caractérisée en ce que** ledit trou de fixation (513) ayant presque la forme d'un T tel que vu en vue plane est formé dans une partie supérieure d'une face de fixation de support d'assemblage (516) prévue au niveau du corps d'élément de support de direction (503), ledit trou de fixation (513) étant configuré pour maintenir temporairement le support d'assemblage de partie de montage de véhicule (511) dans un état suspendu.
